# EUROPEAN PATENT APPLICATION

(11) **EP 4 760 655 A1**
(43) Date of publication of application: **17.06.2026**
(21) Application number: 25219885.8
(22) Date of filing: 01.12.2025
(51) Int. Cl.: G06V 10/82, G06V 20/40, G06V 20/52, H04N 7/18, G06V 40/10, G06V 40/16, G06V 40/20

(54) **SYSTEMS AND METHODS FOR INCREASING SITUATIONAL AWARENESS OF ALERTS GENERATED BY A VIDEO MONITORING SYSTEM**

(30) Priority: 11.12.2024 US 202418977489
(71) Applicant: Honeywell International Inc., Charlotte, NC 28202 (US)
(72) Inventor: ESWARA, Lalitha M., Charlotte, 28202 (US); GUPTA, Anchal, Charlotte, 28202 (US)
(74) Representative: Haseltine Lake Kempner LLP

(57) **Abstract**

Methods and systems are provided for increasing situational awareness of alerts from a video monitoring system. Video analytics algorithms detect conditions in a video stream and generate alerts. For each alert, a video clip is extracted containing frames before and/or after the alert. A Generative AI video-to-text summarization model generates text summaries of the video frames, which are processed by a Large Language Model to generate context for each alert. Enhanced alerts are output containing both the alert type and generated context to provide increased situational awareness. The system can store alert history with timestamps for pattern analysis and prediction of future alerts. Additional features include multi-event correlation, root cause analysis, and detection of various conditions like intrusion, loitering, and crowd formation.

## Description

### TECHNICAL FIELD

The present disclosure relates generally to video monitoring systems, and more particularly to increasing situational awareness of alerts that are generated by a video monitoring system.

### BACKGROUND

Video surveillance systems often employ a variety of video analytics algorithms that are tied to different uses cases such as intrusion, loitering, people count, violence detection, and others. These video analytics algorithms may run on the edge or in video surveillance systems. Each of the video analytics algorithms may identify certain conditions or events occurring in a video stream of the video surveillance systems. When an event is identified, an alert may be issued to an operator of the video surveillance system. In response, the operator must typically identify and then review the video stream from the camera that captured the identified event to determine whether the identified event is in fact an event of concern or not. If the event is not of a concern, the operator may simply acknowledge the alert and move on. If the event is of a concern, the operator may perform a series of predetermined Standard Operating Procedure (SOP) steps to address the alert. The alerts typically correspond to specific events that are detected by the video analytics algorithms in the video. The alerts typically do not give the security operator any "context" to the alert, such as the situation or circumstances that led up to the alert and/or what occurred after the alert. What would be desirable are systems and methods that automatically determine a context for each of the alerts and provide both the alert and the context to the security operator to help increase the operator's situational awareness. The context for each alert may provide additional information about movements and/or behaviors in the video leading up to and/or after the alert. In some cases, the context can be used to pre-empt upcoming alerts.

### SUMMARY

The present disclosure relates generally to video monitoring systems, and more particularly to increasing situational awareness of alerts that are generated by a video monitoring system. An example may be found in a method for increasing an operator's situational awareness of alerts generated by a video monitoring system. The illustrative method includes applying one or more video analytics algorithms to a video stream captured by the video monitoring system. Each of the one or more video analytics algorithms are configured to detect a corresponding condition occurring in the video stream, and in response to detecting the corresponding condition in the video stream, the respective video analytics algorithm is configured to provide an alert having alert metadata, wherein the alert metadata may include an alert type and/or one or more attributes of one or objects detected in the video stream.

For each alert, a video clip is extracted from the video stream that includes one or more video frames of the video stream before and/or one or more video frames after the respective alert. In some cases, the video clip may also include one or more video frames of the video stream that capture the respective alert. For each alert, a Generative Artificial Intelligence (Gen AI) video-to-text summarization model is applied to the respective video clip to generate a text summary of each of one or more video frames before and/or one or more video frames after the respective alert. A text summary may also be generated for each of the one or more video frames of the video stream that capture the respective alert. For each alert, a Large Language Model (LLM) is applied to the text summaries of the one or more video frames of the respective video clip, and in some cases at least some of the alert metadata, to generate a context for the respective alert. An example context may include "people clusters", "Crowd Forming", "more movements in area", "sudden influx of vehicles", "loud continuous honking", etc. An enhanced alert is outputted for at least some of the alerts raised by the one or more video analytics algorithms, wherein the enhanced alert includes the alert type of the respective alert and the generated context for the respective alert, wherein the enhanced alert provides increased situational awareness for the respective alert. In some cases, a history of the alerts and their respective contexts are stored, each with a timestamp, for subsequent pattern analysis and prediction. An occurrence of one or more future alerts within a future time frame may be predicted based on the history of alerts and their respective contexts.

Another example may be found in a system for increasing an operator's situational awareness of alerts generated by a video monitoring system. The illustrative system includes an input for receiving a video stream captured by the video monitoring system and a controller that is operatively coupled to the input. The controller is configured to apply one or more video analytics algorithms to the video stream, wherein each of the one or more video analytics algorithms is configured to detect a corresponding event or condition occurring in the video stream, and in response to detecting the corresponding condition in the video stream, the respective video analytics algorithm is configured to provide an alert having an alert type. The controller is configured to apply a video-to-text summarization model to the video stream to generate a text summary of one or more video frames of the video stream including one or more video frames before and/or one or more video frames after each of the alerts provided by the one or more video analytics algorithms. The controller is configured to apply a Large Language Model (LLM) to the text summaries of the one or more video frames of the video stream including the one or more video frames before and/or the one or more video frames after each of the alerts provided by the one or more video analytics algorithms to generate a context for each of the alerts provided by the one or more video analytics algorithms. A text summary may also be generated for each of the one or more video frames of the video stream that capture the respective alert. The controller is configured to output an enhanced alert for at least some of the alerts provided by the one or more video analytics algorithms, wherein the enhanced alert includes the alert type of the respective alert and the generated context for the respective alert, wherein the enhanced alert provides increased situational awareness for the respective alert.

Another example may be found in a non-transitory computer readable medium storing instructions. When the instructions are executed by one or more processors, the one or more processors are caused to apply one or more video analytics algorithms to a video stream, wherein each of the one or more video analytics algorithms is configured to detect a corresponding event or condition occurring in the video stream, and in response to detecting the corresponding condition in the video stream, the respective video analytics algorithm is configured to provide an alert having an alert type. The one or more processors are caused to apply a video-to-text summarization model to the video stream to generate a text summary of one or more video frames of the video stream including one or more video frames before and/or one or more video frames after each of the alerts provided by the one or more video analytics algorithms. A text summary may also be generated for each of the one or more video frames of the video stream that capture the respective alert. The one or more processors are caused to apply a Large Language Model (LLM) to the text summaries of the one or more video frames of the video stream including the one or more video frames before, the one or more video frames after each of the alerts and/or the one or more video frames that capture each of the alert provided by the one or more video analytics algorithms to generate a context for each of the alerts provided by the one or more video analytics algorithms. The one or more processors are caused to output an enhanced alert for at least some of the alerts provided by the one or more video analytics algorithms, wherein the enhanced alert includes the alert type of the respective alert and the generated context for the respective alert, wherein the enhanced alert provides increased situational awareness for the respective alert.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative system for increasing an operator's situational awareness of alerts that are generated by a video monitoring system;
Figures 2A and 2B are flow diagrams that together show an illustrative method for increasing an operator's situational awareness of alerts that are generated by a video monitoring system;
Figure 3 is a flow diagram that shows an illustrative series of steps that may be carried out by one or more processors executing instructions stored on a non-transitory computer readable medium;
Figure 4 is a flow diagram showing an overview;
Figure 5 is a flow diagram showing details of a data aggregation module;
Figure 6 is a flow diagram showing details of a context aggregation module;
Figure 7 is a flow diagram showing details of temporal data and the context aggregation module;
Figure 8 is a flow diagram showing an enhanced situation awareness method; and
Figure 9 is a flow diagram showing illustrative outputs.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

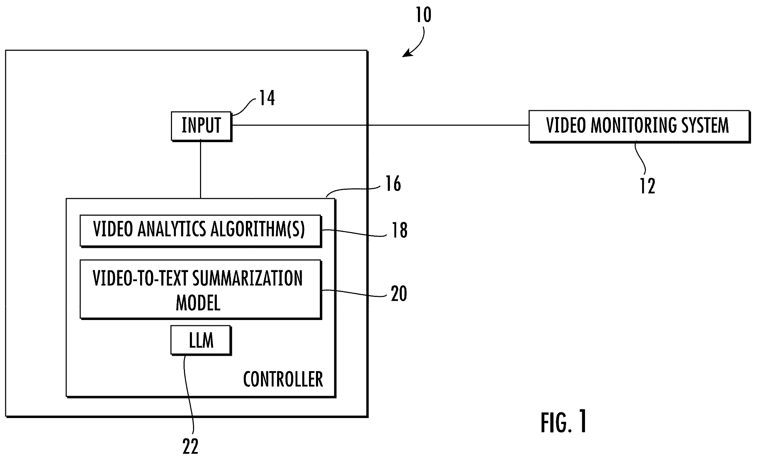

Figure 1 is a schematic block diagram showing an illustrative system 10 for increasing an operator's situational awareness of alerts generated by a video monitoring system 12. The illustrative system 10 includes an input 14 for receiving a video stream captured by the video monitoring system 12. A controller 16 is operatively coupled to the input 14. In some cases, the controller 16 includes or has access to one or more video analytics algorithms 18. In some cases, the controller 16 includes or has access to a video-to-text summarization model 20. In some cases, the controller 16 includes or has access to a Large Language Model (LLM) 22.

The controller 16 is configured to apply one or more of the video analytics algorithms 18 to the video stream. Each of the one or more video analytics algorithms 18 may be configured to detect a corresponding event or condition occurring in the video stream, and in response to detecting the corresponding event or condition in the video stream, the respective video analytics algorithm 18 may be configured to provide an alert having an alert type. An event may be considered a condition. For each alert, the controller 16 is configured to apply the video-to-text summarization model 20 to the video stream to generate a text summary of one or more video frames of the video stream including one or more video frames before and/or one or more video frames after each of the alerts provided by the one or more video analytics algorithms 18. A text summary may also be generated for each of one or more video frames of the video stream that captured the condition that caused the alert. Example text based summarizations three sequential frames N, N+1 and N+2 of an example video stream are shown below:

### Frame N

A middle-aged man, approximately 5'10" tall, is walking across the parking lot. He wears a red hat that casts a shadow across his forehead and part of his nose. His facial expression is neutral, with relaxed eyebrows and a slight squint in his eyes from the sunlight. His lips are pressed together gently, suggesting a calm, focused demeanor. He wears a blue jacket, unzipped to mid-chest, with slight creases around the elbows and shoulders as he swings his arms. His faded jeans show wrinkles near his knees, and he is wearing brown leather shoes. His right foot is firmly planted at (x: 230, y: 400), while his left foot is lifted in mid-stride at (x: 245, y: 380). The gray asphalt beneath him is rough and cracked, with small fractures running diagonally from (x: 100, y: 450) to (x: 600, y: 300). Yellow parking lines appear on either side, approximately 100 pixels apart, faintly worn from use. A red sedan is parked about 15 feet away, with its front bumper visible at (x: 500, y: 590) and its windshield reflecting the bright sunlight. The glare on the windshield forms a bright spot at (x: 510, y: 580), and the car's body has small specks of dust visible along the side. The shadow of the car stretches eastward about 120 pixels from (x: 480, y: 590) to (x: 360, y: 600). To the left of the scene, a row of bushes sways gently in the breeze, with green leaves casting intricate shadows on the ground from (x: 10, y: 20) to (x: 100, y: 100). In the distance, a concrete wall forms the boundary of the parking lot, running horizontally across the frame at the top.

### Frame N+1

The man continues his walk, now with his left foot lowered and planted on the ground at (x: 240, y: 385), while his right foot begins to lift off slightly at (x: 225, y: 395). His face shows a faint look of concentration, with his lips still closed but now slightly tighter as if in thought. His red hat sits squarely on his head, with a more pronounced shadow under its brim as the sun shifts. His blue jacket swings with his movement, with more defined wrinkles forming at the elbows. The jacket's material shimmers slightly in the sunlight, particularly around his left shoulder, where the light hits at an angle. The jeans show additional creases near the knees, and his brown shoes now scuff slightly against the asphalt. The ground beneath him is more visible, with the cracks in the asphalt appearing more prominent around (x: 110, y: 470). The yellow parking lines remain in place, though some faint tire tracks are now visible near his left foot, likely from a vehicle that passed recently. The red sedan remains parked, but the glare on the windshield has shifted slightly, now reflecting more sunlight at (x: 515, y: 585). A few dust particles are kicked up by the slight breeze and float near the rear of the car at (x: 510, y: 610). The car's shadow has shortened slightly to 115 pixels, from (x: 485, y: 595) to (x: 370, y: 600). The man's shadow, cast by the sun overhead, has also shortened slightly, now stretching 115 pixels from (x: 230, y: 400) to (x: 115, y: 460). The bushes to the left are swaying a bit more, their leaves reflecting sunlight and casting intricate shadows on the asphalt. The background concrete wall is now partially obscured by the movement of the leaves, with patches of sunlight shining through.

### Frame N+2

The man's expression has tightened slightly, with his eyebrows furrowing just a bit as if he's thinking hard about something. His left foot is now fully grounded at (x: 245, y: 390), while his right foot is mid-air at (x: 225, y: 400), suggesting he is walking with purpose. The red hat on his head tilts slightly to the right as he turns his head slightly, casting a longer shadow across the left side of his face. The blue jacket sways gently, though a new wrinkle has appeared on his back due to the motion. His right hand remains in his jacket pocket, causing the jacket to pull slightly at his waist. His jeans are more wrinkled at the knees, especially on his left leg, which is more extended as he walks. A small gust of wind kicks up some dust from the ground, visible at (x: 250, y: 415) near his left shoe. The red sedan remains parked, but the sunlight reflecting off its windshield has intensified, forming a larger glare at (x: 520, y: 590). The car's shadow continues to shift as the sun moves slightly, now only 110 pixels long from (x: 480, y: 595) to (x: 365, y: 600). The man's shadow has also changed slightly, now stretching from (x: 225, y: 400) to (x: 110, y: 460). The bushes sway more noticeably, and a few leaves detach, drifting across the parking lot, some landing at (x: 150, y: 600). The sunlight filtering through the bushes creates dappled shadows on the concrete wall behind them.

The controller 16 is configured to apply the LLM 22 to the text summaries of the one or more video frames of the video stream including one or more video frames that captured the condition that caused an alert, the one or more video frames before the alert and/or the one or more video frames after the alert to generate a context for each of the alerts provided by the one or more video analytics algorithms 18. In some cases, when applying the LLM model 22, the controller 16 may be configured to apply the LLM model 22 to the text summaries of the one or more video frames that captured the condition that caused an alert, the one or more video frames before the alert and/or the one or more video frames after the alert, along with the respective alert type, to generate the context for each of the alerts provided by the one or more video analytics algorithms. An example context may include "people clusters", "Crowd Forming", "more movements in area", "sudden influx of vehicles", "loud continuous honking", etc. In some cases, the controller 16 may be configured to apply the LLM 22 to the text summary of each of the video frames that captured the condition that caused an alert, the one or more video frames before the alert and/or the one or more video frames after the alert to generate a frame context for each of the one or more video frames before, during and/or after each of the alerts to generate the context for a particular alert by applying the LLM 22 to the frame contexts for the one or more video frames before, during and/or after after the respective alert.

The controller 16 is configured to output an enhanced alert for at least some of the alerts provided by the one or more video analytics algorithms 18. The enhanced alert includes the alert type of the respective alert and the generated context for the respective alert. The enhanced alert provides increased situational awareness for the respective alert. In some cases, the controller 16 may be configured to store a history of the alerts and their respective contexts, each with a timestamp, for subsequent pattern analysis and prediction. The controller may be configured to predict an occurrence of one or more future alerts within a future time frame based on the history of alerts and their respective contexts.

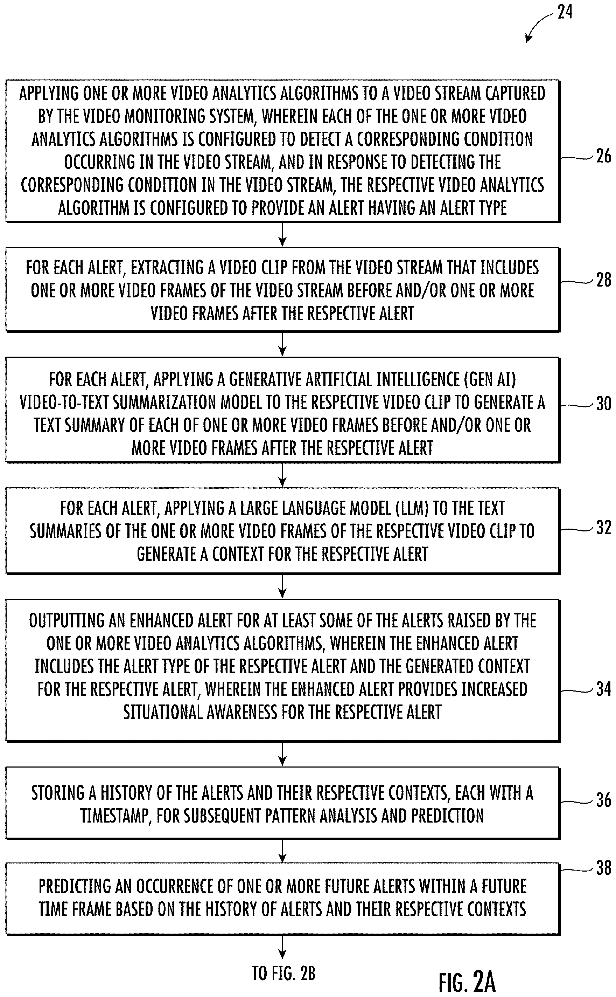

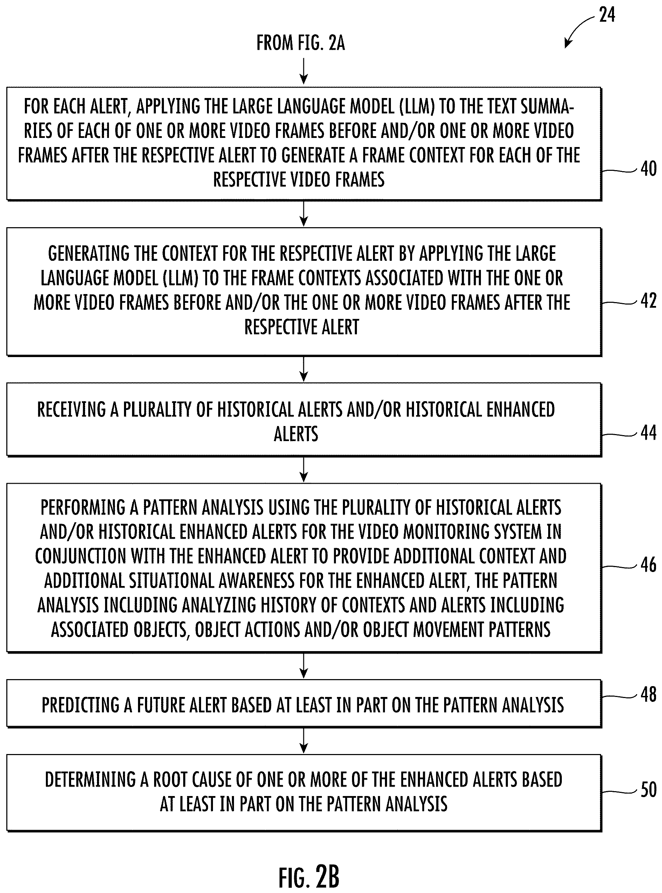

Figures 2A and 2B are flow diagrams that together show an illustrative method 24 for increasing an operator's situational awareness of alerts generated by a video monitoring system (such as the video monitoring system 12). The method 24 includes applying one or more video analytics algorithms to a video stream captured by the video monitoring system, wherein each of the one or more video analytics algorithms is configured to detect a corresponding event or condition occurring in the video stream, and in response to detecting the corresponding event or condition in the video stream, the respective video analytics algorithm is configured to provide an alert having alert metadata, as indicated at block 26. As an example, each alert may include metadata that is provided by the respective video analytics algorithm, wherein the metadata includes one or more of the alert type, a time stamp of the alert, attributes of one or more objects and/or actors associate with the alert, a location of a camera of the video monitoring system that captured the video stream, and a camera ID of a video camera of the video monitoring system that captured the video stream. In some cases, one or more of video analytics algorithms may be configured to detect one or more of objects and/or actors in the video stream. In some cases, a condition to be detected by one or more of video analytics algorithms may include one or more of: people detected in the video stream, loitering detected in the video stream, intrusion detected in the video stream, predetermined behavior detected in the video stream, a crowd detected in the video stream, a particular face detected in the video stream, a particular vehicle detected in the video stream, an object abandonment detected in the video stream, and violence detected in the video stream. These are just examples.

For each alert, a video clip is extracted from the video stream that captured the condition associated with the alert. The video clip includes one or more video frames of the video stream before and/or one or more video frames after the respective alert, as indicated at block 28. In some cases, the video clip may also include one or more video frames of the video stream that capture the respective alert. For each alert, a Generative Artificial Intelligence (Gen AI) video-to-text summarization model is applied to the respective video clip to generate a text summary of each of one or more video frames before, during and/or after the respective alert, as indicated at block 30. In some cases, applying the Gen AI model to the respective video clip may generate a text summary of each of one or more video frames before, one or more video frames during, and one or more video frames after the respective alert. For each alert, a LLM is applied to the text summaries of the one or more video frames of the respective video clip to generate a context for the respective alert, as indicated at block 32. In some cases, applying the LLM model may include, for each alert, applying the LLM to the text summaries of the one or more video frames of the respective video clip, along with the respective alert type, to generate the context for respective alert. In some cases, the metadata provided by the respective video analytics algorithm may also be provided to the LLM model.

An enhanced alert is outputted for at least some of the alerts raised by the one or more video analytics algorithms, wherein the enhanced alert includes the alert type of the respective alert and the generated context for the respective alert, wherein the enhanced alert provides increased situational awareness for the respective alert, as indicated at block 38. In some cases, a context for at least some of the alerts may include an alert subject, an alert object and an alert connected preposition. As an example, the alert connected preposition may include one or more of time, location, movement, manner, source, size, and possession. In some cases, the enhanced alert may identify one or more events, alarms or alerts that occur within a threshold distance and a threshold time relative to the respective alert, and providing a multi-event correlation tree for increased situational awareness. In some cases, the method 24 may include storing a history of the alerts and their respective contexts, each with a timestamp, for subsequent pattern analysis and prediction, as indicated at block 36. An occurrence of one or more future alerts within a future time frame may be predicted based on the history of alerts and their respective contexts, as indicated at block 38. In some cases, a pattern of activity before and/or after at least some alert types may be determined based at least in part on the history of the alerts and their respective contexts, and reporting the determined pattern of activity to the operator.

Continuing on Figure 2B, the method 24 may include, for each alert, applying the LLM to the text summaries of each of one or more video frames before, one or more video frames during and/or one or more video frames after the respective alert to generate a frame context for each of the respective video frames, as indicated at block 40. The method 24 may include generating the context for the respective alert by applying the LLM to the frame contexts associated with the one or more video frames before and/or the one or more video frames after the respective alert, as indicated at block 42.

In some cases, the method 24 may include storing a plurality of historical alerts and/or historical enhanced alerts, as indicated at block 44. A pattern analysis may be performed using the plurality of historical alerts and/or historical enhanced alerts for the video monitoring system in conjunction with the enhanced alert to provide additional context and additional situational awareness for the enhanced alert. The pattern analysis may include analyzing history of contexts and alerts including associated objects, object actions and/or object movement patterns, as indicated at block 46. In some cases, the method 24 may include predicting a future alert based at least in part on the pattern analysis, as indicated at block 48. In some cases, the method 24 may include determining a root cause of one or more of the enhanced alerts based at least in part on the pattern analysis, as indicated at block 50.

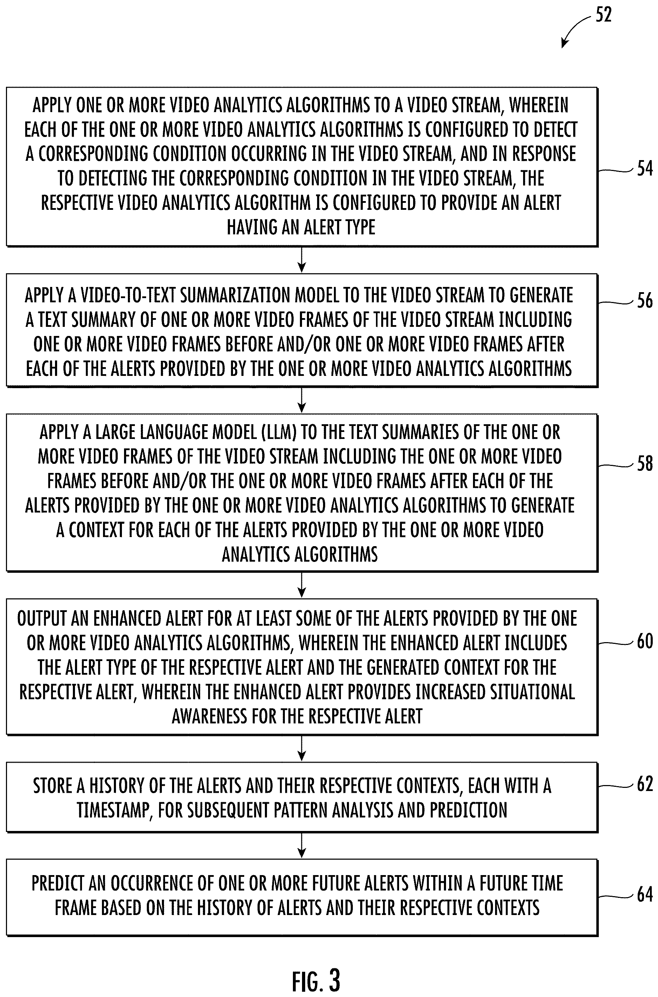

Figure 3 is a flow diagram that shows an illustrative series of steps 52 that may be carried out by one or more processors when the one or more processors execute instructions that are stored on a non-transitory computer readable medium. In some cases, the one or more processors may be part of the controller 16 (Figure 1). The one or more processors are caused to apply one or more video analytics algorithms to a video stream, wherein each of the one or more video analytics algorithms is configured to detect a corresponding event or condition occurring in the video stream, and in response to detecting the corresponding event or condition in the video stream, the respective video analytics algorithm is configured to provide an alert having an alert type, as indicated at block 54. The one or more processors are caused to apply a video-to-text summarization model to the video stream to generate a text summary of one or more video frames of the video stream including one or more video frames before, one or more video frames during and/or one or more video frames after each of the alerts provided by the one or more video analytics algorithms, as indicated at block 56. The one or more processors are caused to apply a Large Language Model (LLM) to the text summaries of the one or more video frames of the video stream including the one or more video frames before, the one or more video frames during and/or the one or more video frames after each of the alerts provided by the one or more video analytics algorithms to generate a context for each of the alerts provided by the one or more video analytics algorithms, as indicated at block 58. The one or more processors are caused to output an enhanced alert for at least some of the alerts provided by the one or more video analytics algorithms, wherein the enhanced alert includes the alert type of the respective alert and the generated context for the respective alert, wherein the enhanced alert provides increased situational awareness for the respective alert, as indicated at block 60.

In some cases, the one or more processors may be caused to store a history of the alerts and their respective contexts, each with a timestamp, for subsequent pattern analysis and prediction, as indicated at block 62. In some cases, the one or more processors may be caused to predict an occurrence of one or more future alerts within a future time frame based on the history of alerts and their respective contexts, as indicated at block 64.

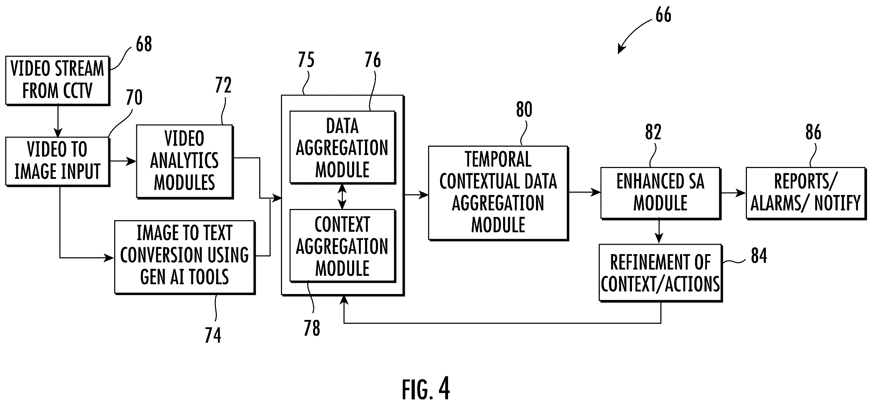

Figure 4 is a flow diagram showing an overview 66. A video stream is provided, as indicated at block 68. A video to image input 70 receives the video stream. The video to image input 70 communicates with a video analytics modules 72 and with a block 74 which handles image to text conversion using GenAI tools. The output from the video analytics modules 72 and block 74 include the events/data/meta data extracted/detected by the Video Analytics modules 72 and contexts generated by the Gen AI models in block 74. Contexts are generally represented in the form of texts like "cat on the table", whereas the video analytics modules 72 give meta-data output such as cat, table, etc., in addition to alerts/events detected. Outputs from block 72 and 74 are provided to a block 75 that includes both a data aggregation module 76 and a context aggregation module 78. The block 75 outputs to a temporal contextual data aggregation module 80. The temporal contextual data aggregation module 80 appropriately concatenates the image data to include the temporal variations for video that is coming in as the input. The output of the temporal contextual data aggregation module 80 has summarized information of metadata and contexts in the temporal axis, which gives additional and rich information in addition to the alarms/events and metadata, leading to enhanced situation awareness. Output from the temporal contextual data aggregation module 80 is provided to an enhanced SA module 82, which provides an output to a refinement block 84. Refinement of the contexts/actions/SOPs etc. are then either done by operators or by Artificial Intelligence (AI) methods. The refinement block 84 outputs to the block 75. The enhanced SA module 82 provides reports and alarms, as indicated at block 86.

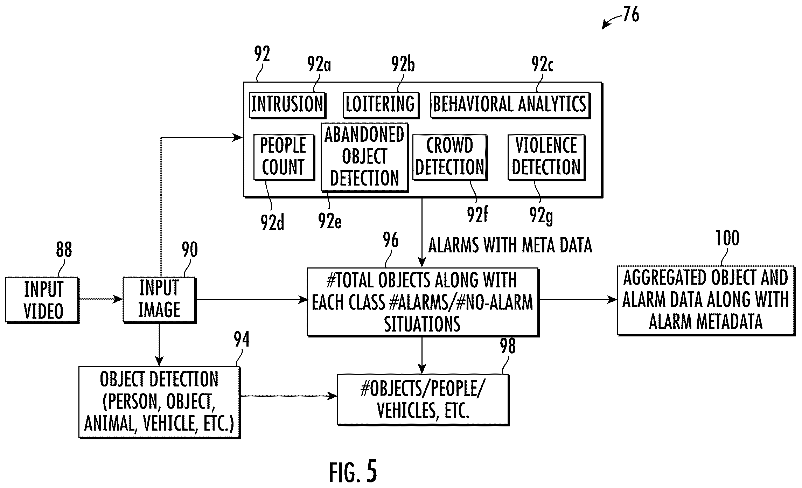

Figure 5 is a flow diagram showing details of the data aggregation module 76 of Figure 4. The data aggregation module 76 runs AI models or traditional computer vision technologies to detect different objects such as persons, vehicles, objects and sub-category classes and meta data. Different Video analytics modules 92 are also run to get events or use-case alerts such as loitering, intrusion, behavioral analytics, people count, crowd count etc. These alarms/events and metadata are extracted and stored along with timestamps. The data aggregation module 76 primarily processes and stores different objects or actors and the alarms/event data, which forms the 'Data' part of situation awareness. With reference to Figure 5, Video is received, as indicated at block 88 and is provided to an image input, as indicated at block 90. Images are sent in several directions from block 90. A video analytics algorithms block 92 includes, for example, an intrusion algorithm 92a, a loitering algorithm 92b, a behavioral analytics algorithm 92c, a people count algorithm 92d, an abandoned object detection algorithm 92e, and a violence detection algorithm 92f. The video analytics algorithms block 92 outputs alerts (alarms) and metadata to a block 96 which counts the alerts (alarms). The image input 90 is also provided to block 96. The image input 90 also outputs to an object detection module 94. The block 94 and the block 96 both output to a block 98 that counts detected objects. Block 96 outputs to an aggregated object and alert (alarm) data block 100.

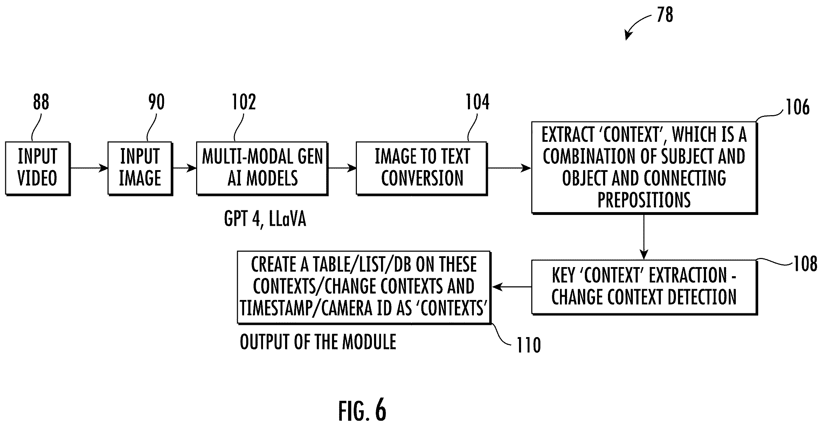

Figure 6 is a flow diagram showing details of the context aggregation module 78 of Figure 4. The context aggregation module 78 focuses on generating "contexts" to the actors by automatic detections of prepositions, including prepositions of time, place, movement, manner, source, measure, possession and agent of the actors (detected in data aggregation module 76). The context aggregation module 78 outputs the "context" of the actors/metadata/alarms detected by the data aggregation module 76. In some cases, the context generation is done for every image (i.e. video frame) within the +/- N minutes or seconds or hours before/after the respective event/alarm.

Video is received, as indicated at block 88 and is provided to an image input, as indicated at block 90. The image input block 90 outputs to Gen-Al models, as indicated at block 102. This may include GPT 4, LLaVA and/or any other suitable Gen-AI models, for example. The Gen-AI models 102 output to an image-to-text conversion block 104, which outputs to block 106. At the block 106, context of the images is extracted. This may include automatically detecting prepositions, including prepositions of time, place, movement, manner, source, measure, possession, and agent of the actors. The extracted context is provided to a block 108 where key context is extracted, and then provided to block 110. At block 110, the accumulated information is put into tabular form.

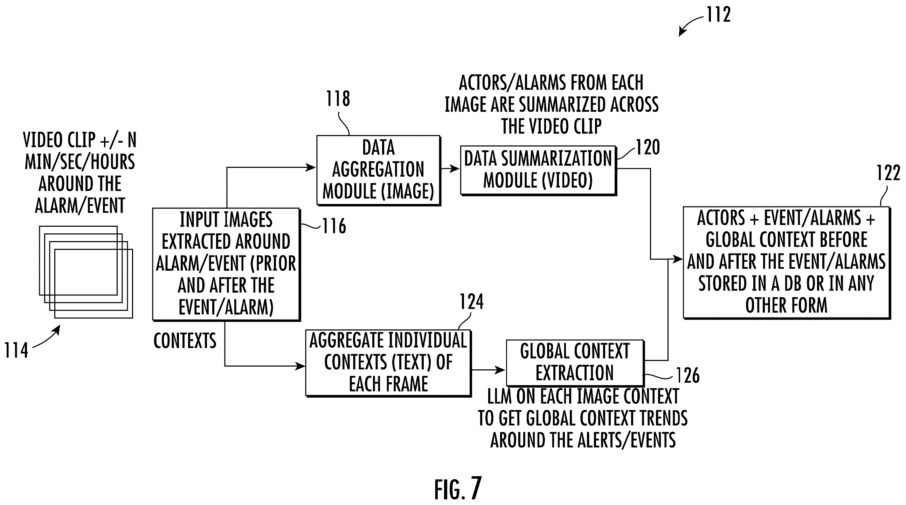

Figure 7 is a flow diagram showing a method 112 detailing how the context generated for every image within the boundary of +/- N hours/minutes/seconds can be combined into one context that aids the final situation awareness. A number of video clips 114 include clips from before, during and after an alarm or event. Input images around the alarm or event are extracted, as indicated at block 116. The method 112 includes two paths. One path includes information provided to the data aggregation module 118 (which may represent the data aggregation module 76 of Figure 4), which then outputs to a data summarization module 120. The data summarization module 120 outputs to a block 122 where relevant information both before and after the alert (alarm) or event is stored. The second path includes information provided to an aggregate block 124. The aggregate block 124 outputs to a global context extraction block 126. The global content extraction block 126 also outputs to the block 122.

As can be seen, in this illustrative embodiment, the two paths of data 118 and context 124 are combined. In the data summarization module 120, the number of actors, classification of actors with their positions, and actions such as running, walking, etc. are derived from the image set 114. Actors, their tracing in the video clip and their actions with respect to movements may be captured. Tracking methods are utilized for this purpose. In the data summarization module 120, the number of average actors, their movement behaviors may also be captured. This is converted to text for easy understanding using any LLM-LLaVA.

The second path 124 of contexts are summarized in the Global Context Generation module 126. In the Global Context Generation module 126, each text representing the context of each image is combined again either using Gen AI LLMs or traditional Natural Language Processing (NLP) techniques to get the summary of different contextual explanation. Typically, the contexts can look like "Cat on the table suddenly jumped seeing a man entering the room", etc. The last module 122 stores both the derived data into a database or any other storage mechanism tagged with the alarm/event and the timestamps considered. When the alert (alarm) or event is getting analyzed in near real-time or during an investigation, the derived context along with the alarms/events generated will be showcased for better understanding of the situation and a report can be generated and sent either thru messaging systems or as audio inputs.

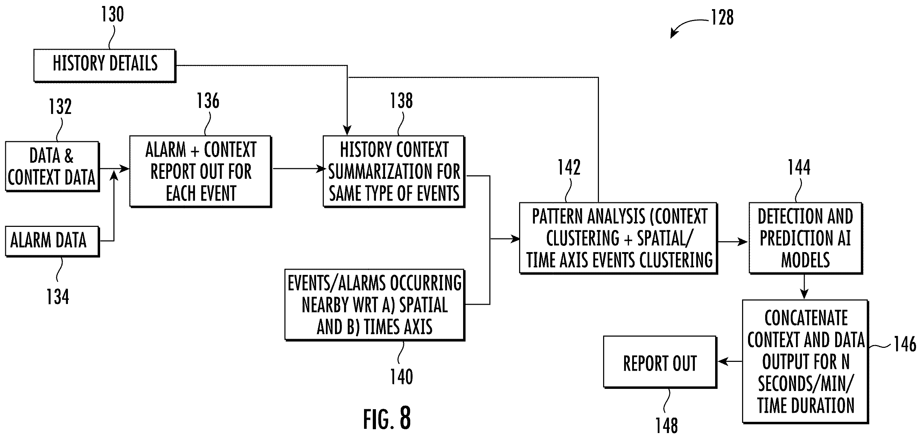

The data derived till now may be combined with the history of events/alarms data and context to check if a pattern of the alarms is the same or similar with respect to earlier happenings. This may provide a clearer indication to the operator/facility manager or any person in the authority to understand the reasons and situations of alarms happenings better than using video analytics for specific use-cases, including the behavioral analytics for violence etc. Figure 8 is a flow diagram showing an enhanced situation awareness method 128. This method 128 includes several inputs, including history details as indicated at block 130, data and context data, as indicated at block 132, and alarm data, as indicated at block 134. Data from block 132 and block 134 are provided to a block 126 where alarm and context data may be reported out for each event. Output from block 130 and from block 136 is provided to a history context summarization block 138. The history context summarization block 138, and a block 140 that summarizes nearby events and alarms, both output to a pattern analysis block 142. Output from the pattern analysis block 142 is provided to detection and prediction AI models, as indicated at block 144. Context is concatenated at block 146, and then is reported out, as indicated at block 148.

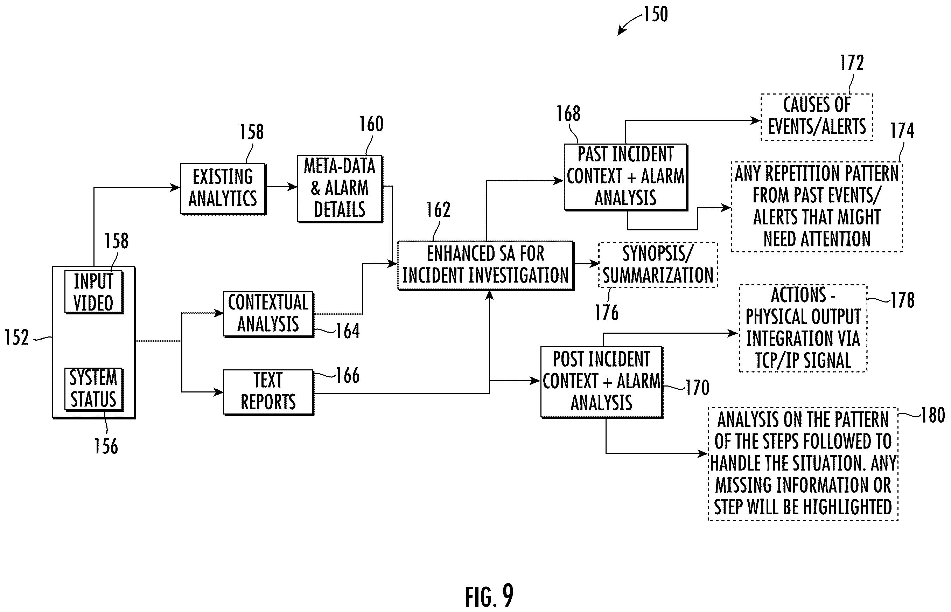

Past and post incident analysis may result in various reports. Figure 9 is a flow diagram showing a method 150 and corresponding outputs from the method 150. A block 152, which includes input video 154 and system status 156, outputs in several directions. The block 152 outputs to existing analytics, as indicated at block 158. Block 158 then outputs to a metadata and alarm details block 160. From there, data flows to an enhanced SA block 162. The block 152 outputs to contextual analysis, as indicated at block 162 and to text reports, as indicated at block 164. Both blocks 162 and 164 output to the enhanced SA block 162. From there, data flows to block 168, where past incidents are analyzed, and to block 170, where current incidents are analyzed. The block 168 outputs causes, as indicated at block 172, and any repetitive patterns, as indicated at block 174. From block 162, a synopsis or summary is outputted, as indicated at block 176. From block 170, actions are outputted, as indicated at block 178, and an analysis on patterns is outputted, as indicated at block 180.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for increasing an operator's situational awareness of alerts generated by a video monitoring system, the method comprising:
applying one or more video analytics algorithms to a video stream captured by the video monitoring system, wherein each of the one or more video analytics algorithms is configured to detect a corresponding condition occurring in the video stream, and in response to detecting the corresponding condition in the video stream, the respective video analytics algorithm is configured to provide an alert having alert metadata, wherein the alert metadata includes an alert type and one or more attributes of one or objects detected in the video stream;
for each alert, extracting a video clip from the video stream that includes one or more video frames of the video stream before and/or one or more video frames after the respective alert;
for each alert, applying a Generative Artificial Intelligence (Gen AI) video-to-text summarization model to the respective video clip to generate a text summary of each of one or more video frames before and/or one or more video frames after the respective alert;
for each alert, applying a Large Language Model (LLM) to the text summaries of the one or more video frames of the respective video clip and at least some of the alert metadata to generate a context for the respective alert; and
outputting an enhanced alert for at least some of the alerts raised by the one or more video analytics algorithms, wherein the enhanced alert includes the alert type of the respective alert and the generated context for the respective alert, wherein the enhanced alert provides increased situational awareness for the respective alert.

2. The method of claim 1 comprising:
storing a history of the alerts and their respective contexts, each with a timestamp, for subsequent pattern analysis and prediction;
performing one or more of:
determining a pattern of activity before and/or after at least some alert types based at least in part on the history of the alerts and their respective contexts, and reporting the determined pattern of activity to the operator; and
predicting an occurrence of one or more future alerts within a future time frame based on the history of alerts and their respective contexts, and reporting the predicted future alerts to the operator.

3. The method of either of claims 1 or 2, wherein applying the LLM model comprises for each alert, applying the Large Language Model (LLM) to the text summaries of the one or more video frames of the respective video clip, along with the respective alert type, to generate the context for respective alert;
optionally wherein the alert metadata includes one or more of the alert type, a time stamp, attributes of one or more objects and/or actors associate with the alert, a location of a camera of the video monitoring system that captured the video stream, and a camera ID of a video camera of the video monitoring system that captured the video stream.

4. The method of any preceding claim, wherein one or more of video analytics algorithms are configured to detect one or more of objects and/or actors in the video stream.

5. The method of claim 4, wherein the condition to be detected by one or more of video analytics algorithms includes one or more of: people detected in the video stream, loitering detected in the video stream, intrusion detected in the video stream, predetermined behavior detected in the video stream, a crowd detected in the video stream, a particular face detected in the video stream, a particular vehicle detected in the video stream, an object abandonment detected in the video stream, and violence detected in the video stream.

6. The method of any preceding claim, wherein applying the Generative Artificial Intelligence (Gen AI) video-to-text summarization model to the respective video clip generates a text summary of each of one or more video frames before and one or more video frames after the respective alert.

7. The method of any preceding claim, wherein the context for at least some of the alerts includes an alert subject, an alert object and an alert connected preposition.

8. The method of claim 8, wherein the alert connected preposition is one or more of time, location, movement, manner, source, size, and possession.

9. The method of any preceding claim, comprising:
for each alert, applying the Large Language Model (LLM) to the text summaries of each of one or more video frames before and/or one or more video frames after the respective alert to generate a frame context for each of the respective video frames; and
generate the context for the respective alert by applying the Large Language Model (LLM) to the frame contexts associated with the one or more video frames before and/or the one or more video frames after the respective alert.

10. The method of any preceding claim, wherein:
the enhanced alert identifies one or more events, alarms or alerts that occur within a threshold distance and a threshold time relative to the respective alert; and
providing a multi-event correlation tree for increased situational awareness.

11. The method of any preceding claim, further comprising:
receiving a plurality of historical alerts and/or historical enhanced alerts; and
performing a pattern analysis using the plurality of historical alerts and/or historical enhanced alerts for the video monitoring system in conjunction with the enhanced alert to provide additional context and additional situational awareness for the enhanced alert, the pattern analysis including analyzing history of contexts and alerts including associated objects, object actions and/or object movement patterns.

12. The method of claim 11, comprising predicting a future alert based at least in part on the pattern analysis.

13. The method of claim 11, comprising determining a root cause of one or more of the enhanced alerts based at least in part on the pattern analysis.

14. A system for increasing an operator's situational awareness of alerts generated by a video monitoring system, the system comprising:
an input for receiving a video stream captured by the video monitoring system;
a controller operatively coupled to the input, the controller is configured to:
apply one or more video analytics algorithms to the video stream, wherein each of the one or more video analytics algorithms is configured to detect a corresponding condition occurring in the video stream, and in response to detecting the corresponding condition in the video stream, the respective video analytics algorithm is configured to provide an alert having an alert type;
apply a video-to-text summarization model to the video stream to generate a text summary of one or more video frames of the video stream including one or more video frames before and/or one or more video frames after each of the alerts provided by the one or more video analytics algorithms;
apply a Large Language Model (LLM) to the text summaries of the one or more video frames of the video stream including the one or more video frames before and/or the one or more video frames after each of the alerts provided by the one or more video analytics algorithms to generate a context for each of the alerts provided by the one or more video analytics algorithms; and
output an enhanced alert for at least some of the alerts provided by the one or more video analytics algorithms, wherein the enhanced alert includes the alert type of the respective alert and the generated context for the respective alert, wherein the enhanced alert provides increased situational awareness for the respective alert.

15. A non-transitory computer readable medium storing instructions that when executed by one or more processors causes the one or more processors to:
apply one or more video analytics algorithms to a video stream, wherein each of the one or more video analytics algorithms is configured to detect a corresponding condition occurring in the video stream, and in response to detecting the corresponding condition in the video stream, the respective video analytics algorithm is configured to provide an alert having an alert type;
apply a video-to-text summarization model to the video stream to generate a text summary of one or more video frames of the video stream including one or more video frames before and/or one or more video frames after each of the alerts provided by the one or more video analytics algorithms;
apply a Large Language Model (LLM) to the text summaries of the one or more video frames of the video stream including the one or more video frames before and/or the one or more video frames after each of the alerts provided by the one or more video analytics algorithms to generate a context for each of the alerts provided by the one or more video analytics algorithms; and
output an enhanced alert for at least some of the alerts provided by the one or more video analytics algorithms, wherein the enhanced alert includes the alert type of the respective alert and the generated context for the respective alert, wherein the enhanced alert provides increased situational awareness for the respective alert.
